# EUROPEAN PATENT APPLICATION

(11) **EP 1 488 700 A1**
(43) Date of publication of application: **22.12.2004**
(21) Application number: 04253684.7
(22) Date of filing: 18.06.2004
(51) Int. Cl.: A21B 1/48, F23D 14/12, F24C 3/08

(54) **Burner and Radiator Assembly for a Tunnel Oven**

(30) Priority: 20.06.2003 GB 0314482
(71) Applicant: UNITED BISCUITS (UK) LIMITED, Hayes, Middlesex UB4 8EE (GB)
(72) Inventor: Rolston, Robert Mitchell, Bicester OxfordshireOX25 4AF (GB)
(74) Representative: Humphreys, Ceris Anne

(57) **Abstract**

A gas burner and radiator assembly (9) for a tunnel oven comprises a gas burner (10) for a tunnel oven and a radiator flap (16), at least a portion of the radiator flap being of metal or metal alloy, and being so arranged that, in operation in the oven, the said portion of the radiator flap extends adjacent to the burner and, when the burner is alight and in normal operation in the oven, the visible part of a flame from the burner impinges on the said portion of the radiator flap.

## Description

The invention relates to burners, and especially to gas burners of the kind used in ovens in which a conveyor is arranged to transport material to be heated, which may be in the form of discrete articles, past a series of gas burners. Such ovens are often referred to as "tunnel" ovens or "conveyor" or "band" ovens, and will all be referred to in this specification as "tunnel ovens". Such ovens are used for a variety of purposes, for example, to dry material or to effect the baking of food products.

Gas burners for such ovens are generally of elongate tubular configuration and have an outlet, which may be in the form of one or more apertures along their length, but is more often in the form of a continuous slot. In use, a combustible mixture of fuel gas and air is supplied to the burner and exits through the outlet, the gas being ignited as it leaves the burner so that a flame projects from the outlet and extends away from the burner. Each burner is usually arranged so that it has its axis perpendicular to the direction of travel of the material being carried through the oven and so that, in use, the combusting gases leave the burner in substantially the same direction as that of the material being heated as it travels past the burner. It is common to insert in or adjacent to the outlet a corrugated ribbon, which serves to anchor to the burner the visible, or luminous, part of the flame created by the combusting gases. Commercial tunnel ovens can be provided with up to one hundred or more upper burners arranged above the material being conveyed through the oven, and may also be provided with the same number of lower burners below the material. After leaving the burners, the hot combustion gases will tend to rise, and in the case of the upper burners, will generally impinge on the roof of the oven. That may result in the formation of hot spots on the roof of the oven.

It has previously been proposed to shield the roof of the oven by attaching to the roof a screen made of stainless steel. The screen serves not only to protect the roof but also serves as a reflector of radiated heat back onto the material being carried through the oven. In another proposal, interlocking ceramic tiles in a metal holding frame or carriage mounted on the oven and located above each of the burners have been used, the ceramic tiles being heated by the combustion gases, and being arranged to radiate heat downwards onto the material travelling through the oven.

The invention provides a gas burner and radiator assembly for a tunnel oven, the assembly comprising a gas burner for a tunnel oven and a radiator flap, at least a portion of the radiator flap being of metal or metal alloy, and being so arranged that, in operation in the oven, the said portion of the radiator flap extends adjacent to the burner and, when the burner is alight and in normal operation in the oven, the visible part of a flame from the burner impinges on the said portion of the radiator flap.

When the gas burner and radiator assembly of the invention are in operation in a tunnel oven through which material is being conveyed and heated by the burner, the radiator flap is arranged to be heated by the visible, or hottest, part of the flame and hot combustion gases as they travel away from the burner, such heating being effected mainly by convection. It is possible to arrange that the radiator flap then radiates heat towards the material passing through the oven to augment heat flux incident upon the said material.

The radiator flap is advantageously so arranged that, in operation in the oven, it has an exposed face in the path of combustion gases from the burner so that these gases travel over the exposed face as they flow away from the burner. Preferably, the said metal or metal alloy portion of the radiator flap provides at least a portion of its exposed face, which face is so arranged, in operation in the oven, that heat radiated therefrom is directed towards material being conveyed through the oven. It is desirable that the profile or contour of the said exposed face of the radiator flap and/or the configuration of the radiator flap is such as to maximise contact time between the hot combustion gases and the radiator flap while not impeding the flow of those gases or altering their path to any significant extent. Also, it is preferred that the radiator flap has such a configuration, and is so positioned, in operation, that no significant heat flux from the radiator flap reaches the burner. Advantageously, therefore, the radiator flap is arranged adjacent to, but separated from, the burner, in operation in the oven. Preferably, the radiator is thermally insulated on its side facing away from the flame of the burner.

The use of one or more burner and radiator assemblies in accordance with the invention in a tunnel oven in the place of one or more conventional upper and/or lower burners can lead to an increase in the heat flux reaching the material being conveyed through the oven, and thus an increased efficiency of the oven with significant energy saving in terms of fuel costs. Such an increase can be achieved in a more compact manner than the previously proposed stainless steel screen and bulky ceramic tile arrangements referred to above. Further, because at least a portion of the or each radiator flap is arranged in, or adjacent to, the hottest part of the flame, the radiator flap can achieve a much higher temperature than screens or tiles arranged near to the roof of the oven resulting in a greater heat output and increased heat transfer to the material passing through the oven.

Advantageously, the radiator flap is so arranged that it can be inserted with the burner into the tunnel oven and removed with the burner therefrom.

The invention also provides a tunnel oven having a conveyor for transporting material to be heated through the oven, at least one gas burner for heating the material as it is conveyed through the oven, a burner port through which the gas burner is removable from the oven for maintenance and/or replacement, and a radiator flap associated with the said burner, the radiator flap being removable from the oven with the burner through the burner port, at least a portion of the radiator flap being of metal or metal alloy, and, in operation, extending adjacent to the burner so that, when the burner is alight and in normal operation, the visible part of the flame from the burner impinges on the said portion of the radiator flap.

In such an oven having a burner port for the burner through which the burner can be removed and/or replaced, the radiator can be inserted or removed with the burner through the said port. In an oven having a plurality of upper and/or lower burners each provided with a burner port, one or more of the burners may be provided with such radiators. The use of burner and radiator assemblies in accordance with the invention is not limited to new ovens with the assemblies being installed when the oven is built. One or more such assemblies can be installed in an already operational oven, for example, during re-fitting and/or maintenance. The arrangement of the invention has the advantage in that respect over the previously proposed arrangements of the stainless steel screen and the ceramic tiles on bulky carriages, which must generally be installed when the oven is built unless the oven is to be dismantled, or have sizeable openings cut into it to fit such devices at a later stage.

Advantageously, in the gas burner and radiator assembly of the invention, the radiator flap is mounted on the burner. Although the radiator flap may be fixed relative to the burner, preferably, the radiator flap is movable relative to the burner between a folded position in which it can be removed from, or installed in, the oven with the burner and an operational position, in which the flame from the burner impinges on the said portion of the radiator flap. With such an arrangement, for installation purposes, the radiator flap can be moved into its folded position around the burner so that it can be inserted with the burner through a burner port, and then, once inside the oven, can be moved into its operational position in the path of the hot combustion gases from the burner and in which it is arranged to direct radiated heat onto the material being conveyed through the oven. At least when the burner is an upper burner of the oven, the radiator flap may comprise two or more sections that are movable relative to each other between a folded position and an operational position. With such an arrangement, it is possible to provide a longer exposed face comprising the two or more sections in their operational position and so give greater protection to the roof of the oven, and yet still be possible to fold the flap into a configuration small enough to pass through the burner port when required.

The radiator flap is advantageously so arranged that at least that portion on which, in operation in the oven, the burner flame impinges can withstand being heated by the burner to a temperature of at least 800°C. Ideally, at least the said portion, and preferably substantially the entire exposed face of the radiator flap should be made of a material that is able to operate consistently at the operating temperature without any melting or change in phase at that temperature, and to be able to withstand heating to such a temperature and cooling repeatedly without fatigue or damage. Advantageously, at least the said portion of the radiator flap and, preferably, substantially the entire exposed face of the radiator flap, is made of fecralloy (trade mark), which is an alloy including iron and chromium, and which is able to withstand such extremely harsh operating conditions, becoming incandescent at about 800°C to 900°C. The fecralloy may be in the form of a foil, but is preferably in the form of a mesh or mesh-like material, for example, that sold under the name of "Knitmesh" and known for use as ribbons for burners. Such a mesh material has a low thermal conductivity because the mesh is composed of relatively fine gauge wire and because of the presence of air in the interstices of the mesh.

The gas burner may have an output of up to 40 kilowatts per metre length of burner, but preferably has an output of from 15 to 20 kilowatts per metre length of burner.

The tunnel oven may comprise a plurality of zones, each of which comprises a plurality of upper and/or lower gas burners. It has been found possible to make significant energy savings in the operation of such an oven even if only one burner per zone is provided with a radiator flap and forms a burner and radiator assembly in accordance with the present invention.

The invention further provides a method of heating material in a tunnel oven comprising a gas burner and a radiator flap, at least a portion of the radiator flap being of metal or metal alloy, the method comprising conveying the material through the oven so as to be heated by a flame from the gas burner, the visible part of which impinges on the said portion of the radiator flap, the material also being heated by radiation from the radiator flap.

Three forms of a gas burner and radiator assembly, a tunnel oven and a method of heating material in a tunnel oven all in accordance with the invention will now be described, by way of example, with reference to the accompanying drawings, in which:
Fig.1 is a diagrammatic perspective view of a tunnel oven;
Fig. 2 is a diagrammatic perspective view of a first form of burner and radiator assembly comprising a radiator flap, and of a portion of a tunnel oven, all in accordance with the invention;
Fig. 3 is a diagrammatic section through the radiator flap of Fig. 2;
Fig.4 is a diagrammatic side view of a portion of the tunnel oven with the burner and radiator assembly of Fig. 2 inserted in the oven;
Fig. 5 is a diagrammatic side view of a portion of the tunnel oven with a second, modified, form of burner and radiator assembly inserted in the oven;
Fig. 6 is a diagrammatic perspective view of a third form of burner and radiator assembly comprising a radiator flap, and of a portion of the tunnel oven, all in accordance with the invention; and
Fig. 7 is a diagrammatic side view of a portion of the tunnel oven with the burner and radiator assembly of Fig. 6 inserted in the oven.

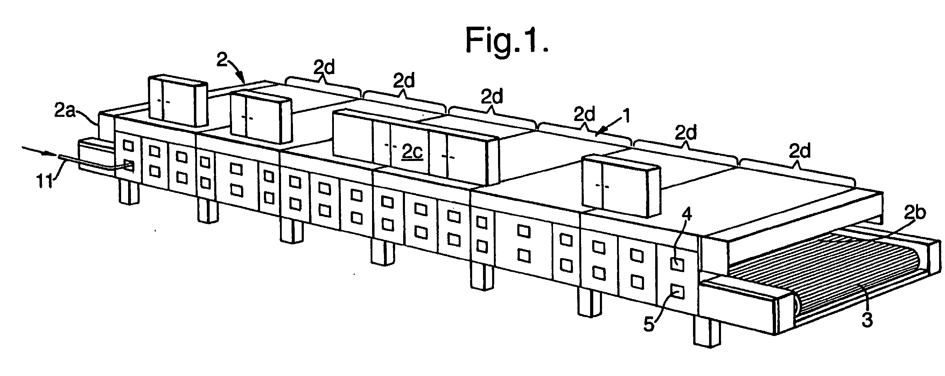

Referring to the drawings, a tunnel oven, indicated generally by the reference numeral 1, comprises a housing, indicated generally by the reference numeral 2, having an inlet 2a for material to be heated to pass into the oven and an exit 2b for material to leave the oven, the material (not shown), which may be, for example, individual food items to be baked, being conveyed through the oven on a conveyor band 3. A control panel 2c is positioned on the roof of the oven 2. The oven 2 is divided into a series of zones 2d, each of which is provided with three upper burners (not shown in Fig. 1) spaced at intervals along the length of the conveyor band 3 and extending with their axes perpendicular to the direction of travel of the upper run of the conveyor band and above the material to be heated. Each zone 2d is also provided with three corresponding lower burners (not shown in Fig. 1) arranged in a similar manner to the upper burners but below the upper run of the conveyor band 3. In addition, a burner port 4 for each of the upper burners and a burner port 5 for each of the lower burners are provided in the side wall of the oven housing 2, through which access can be gained to each of the burners, and through which they can be individually removed for maintenance and/or replacement.

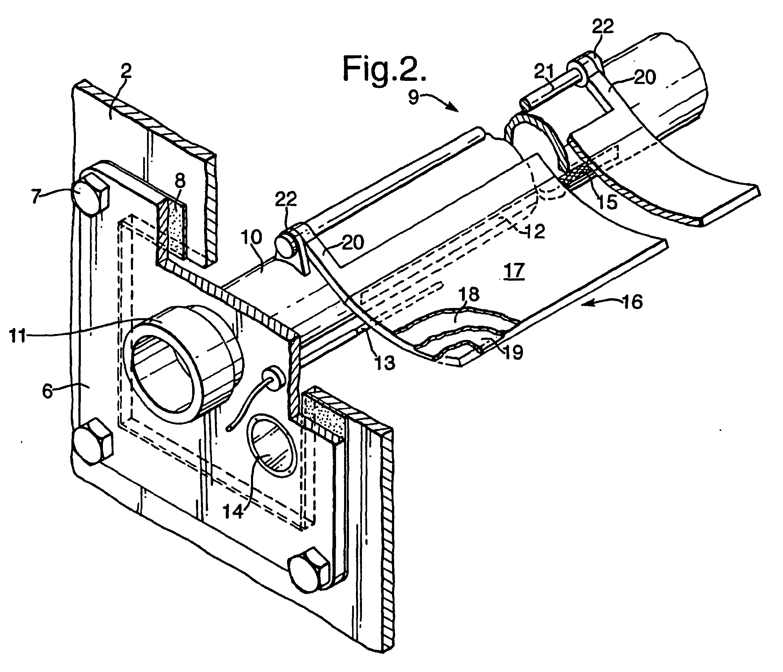

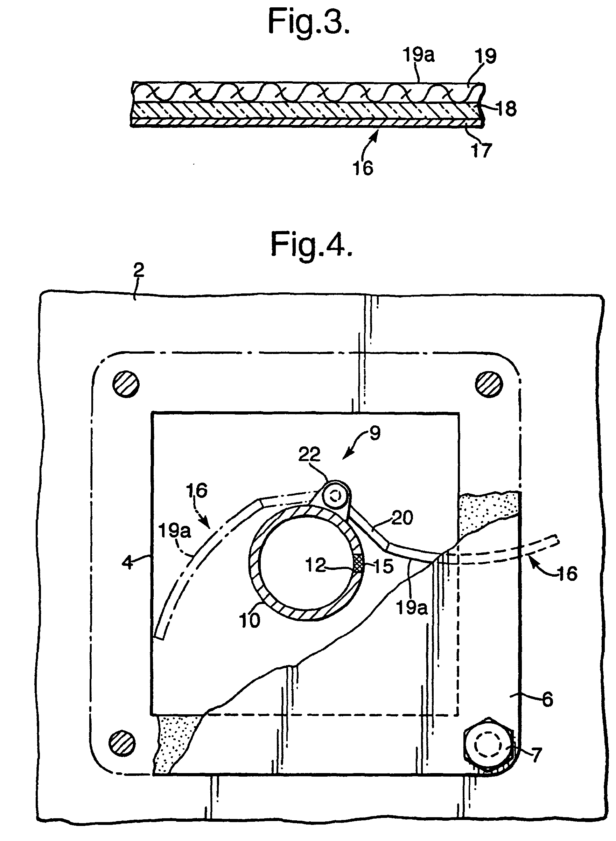

In accordance with the present invention, in a tunnel oven as described above, each of the upper burner ports 4 is closed by a plate 6 (see Fig. 2) which is removably secured to the oven wall by means of four fixing bolts 7, a gasket 8 being provided between the plate and the oven wall to ensure sealing. On the inside of each of the plates 6 of the upper burner ports 4 is mounted a burner and radiator assembly, indicated generally by the reference numeral 9. Each of the burner and radiator assemblies 9 comprises a gas burner 10, which is of tubular elongate configuration being supplied with a combustible mixture of fuel gas and air from sources (not shown) through a supply pipe 11 extending through the plate 6. The burner 10 is formed with a slot 12 which extends in an axial direction along the burner. The slot 12 provides an outlet for the fuel gas and air mixture which is initially ignited by means of an electrode 13 extending adjacent to, and in front of the slot 12 and powered from the oven control box 2c. The electrode 13 also serves as a flame detection probe and will send a signal to the control box 2c if the burner flame is extinguished, the supply of gas to that burner then being stopped. A glass inspection port 14 to allow observation is also provided in the plate 6. As can be seen in Fig. 4, a corrugated ribbon 15 secured in the slot 12 serves to anchor the visible, or luminous, part of the flame to the burner 10. The burner 10 has a heat output of from 15 to 20 kilowatts per metre length of burner.

The assembly 9 also comprises a radiator flap, indicated generally by the reference numeral 16. The radiator flap 16 comprises a backing support plate 17 of stainless steel (see Fig. 3) and a thermally insulating layer 18, which together support a wire mesh layer 19, the wire being made of fecralloy (trade mark), which is an alloy of mainly iron and chromium, and the mesh being that sold under the name of "Knitmesh". The wire mesh layer 19 provides an exposed face 19a. The radiator flap 16 has a gently curved profile (when viewed in a direction along the length of the radiator flap as shown in Fig. 4), and is provided with two legs 20 secured to a rod 21 which is, in turn, rotatably held in mountings 22 on the burner 10 so that the radiator flap can rotate relative to the burner between an operating position as shown in Fig 2 and also, partly in full lines, in Fig. 4, and a folded position as shown in dash and dotted lines in Fig. 4. In its operating position, the radiator flap 16 extends adjacent to the slot 12 of the burner 10, separated from the burner and extending away from it so that the exposed face 19a of the radiator flap lies in the path of the flame and the hot combustion gases from the slot 12. The configuration of the radiator flap 16 and its exposed face 19a is such as to maximise contact between hot combustion gases issuing from the burner and the exposed face while not impeding their flow or significantly altering their path. In its folded position as shown in broken lines in Fig. 4, the radiator flap 16 extends around the burner 10 in a compact arrangement so that both the burner 10 and the radiator flap 16 of the assembly 9 can be withdrawn from the oven through the oven port 5 and/or replaced.

All of the upper burners of the oven 1 may be provided with radiator flaps 16 to form assemblies 9 in accordance with the invention, or only some of them, for example, one burner per oven zone 2d may be provided with a radiator flap 16.

In operation, with the radiator flaps 16 of the upper burners 10 in the operational position, a combustible mixture of fuel gas and air is supplied to both the upper and lower burners of the oven 1, the gas being ignited as it leaves the burners through the slots 12 by means of the electrodes 13. The visible or luminous part of the resulting flame is anchored to each of the burners by the corrugated ribbon 15. In the case of the upper burners, the flame of each of the burners 10 impinges upon a portion of the exposed face 19a of the associated radiator flap 16. Hot combustion gases emerging from the burner travel over the exposed face 19a of the radiator flap 16 which lies in their path heating the radiator flap to a temperature of up to 800°C, at which the fecralloy mesh becomes incandescent. As the temperature of the radiator flap 16 rises, it radiates heat in a direction towards the conveyor band 3 and away from the burner 10. Material to be heated deposited on the conveyor band 3 at the entrance of the oven 1 and conveyed on the band past the upper and lower burners is heated by the burners as well as by radiation from the radiator flaps 16. The thermally insulating backing layers 18 with which the radiator flaps 16 are provided reduce the heat flux reaching the oven roof and help to prevent the formation of hot spots.

When it is desired to carry out maintenance and/or replacement of the upper burners 10 and/or the radiator flaps 16, then the or each radiator flap to be removed can be moved into the folded position as shown in broken lines in Fig. 4, and the assembly 9 removed through the burner port 4. The fact that the configuration of the burner 10 and the radiator flap16 in the folded position can be moved into and out of the oven through the burner port 4 means that such assemblies can be inserted through burner ports in existing ovens not provided with such assemblies when initially built. Once in position in the oven, the radiator flap 16 of the assembly 9 can be moved by rotation about the burner 10 into its operational position.

In the above manner, significant energy savings can be achieved with increased heat output, even if there is only one burner and radiator assembly 9 per oven zone 2d.

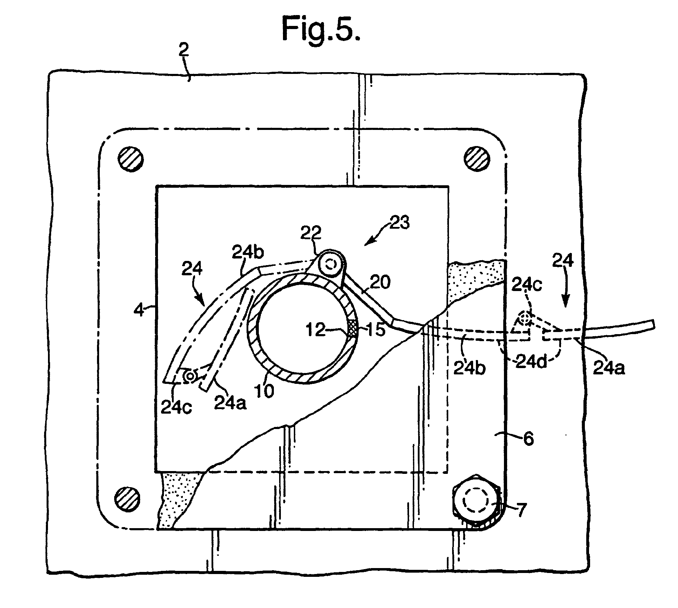

A second form of burner and radiator assembly 23 for an upper burner is shown in Fig. 5. In the second form of assembly 23, the gas burner is similar to that of the first form of the assembly as shown in Figs. 2 and 4, and the same reference numerals have been used to identify similar parts of the burner and the oven. The assembly 23 comprises a modified radiator flap 24, which is made of the same layers of material as the radiator flap 16 as shown in Fig. 3, but which comprises two sections 24a and 24b connected to each other by means of a hinge 24c so that they are movable relative to each other between an operational, extended, position as shown partly in full lines and partly in broken lines in Fig. 5 and a folded position as shown in dash and dotted lines in Fig. 5. In the operational position, the two sections 24a and 24b of the flap 23 together provide a longer exposed face 24d than the exposed face 19a of the flap 16 and give greater protection to the roof of the oven 1. When it is desired to withdraw the assembly 23 from the oven 1, the two sections 24a and 24b are folded up about the hinge 24c and the entire flap 24 folded around the burner 10 so that the assembly can be removed from the oven through the burner port 4.

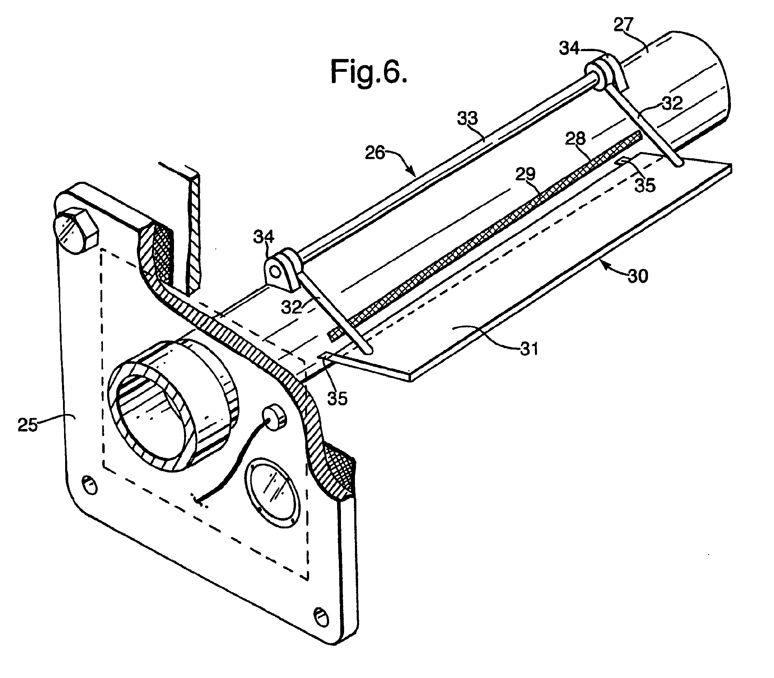

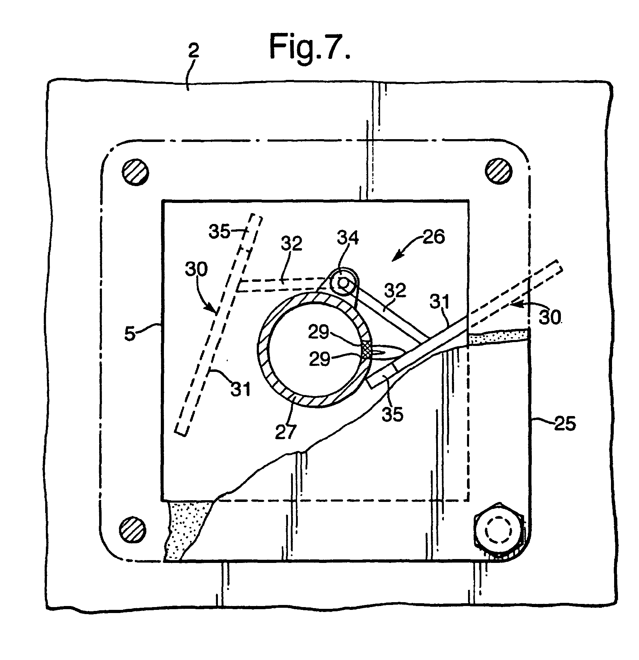

In addition to some or all of the upper burners of the oven 1 being provided with radiator flaps 16 or 24, one or more of the lower burners of the oven 1 may also be provided with radiator flaps as shown in Figs. 6 and 7. In that case, one or more of the lower burner ports 5 is closed by a plate 25, similar to the plate 6 and secured to the oven 1 in a similar manner. On the inside of the plate 25 is mounted a burner and radiator assembly, indicated generally by the reference numeral 26 and comprising a gas burner 27, arranged similarly to the gas burner 10 and formed with a slot 28 which extends in an axial direction along the burner. A corrugated ribbon 29 secured in the slot 28 serves to anchor the visible, or luminous, part of the flame to the burner 27. The assembly 26 also comprises a radiator flap, indicated generally by the reference numeral 30, which is made of the same layers of material as the radiator flap 16 as shown in, and described with reference to, Fig. 3, with a layer of fecralloy mesh material forming an exposed face 31. The radiator flap 30 is mounted on two supports 32 secured to a rod 33 which is, in turn, rotatably held in mountings 34 on the burner 27 so that the radiator flap 30 can rotate relative to the burner between an operating position as shown in Figs. 6 and 7 and a folded position as shown in broken lines in Fig. 7. In its operating position, the radiator flap 30 extends adjacent to the slot 28 of the burner 27, separated and held away by two legs 35 from the burner, and extending away from the burner so that the exposed face 31 of the radiator flap 30 lies in the path of the flame and the hot combustion gases as they travel upwards from the slot 28, the visible portion of the flame impinging on the exposed face. The exposed face 31, when heated by the burner 27, is arranged to radiate heat upwardly towards the material being carried through the oven on the conveyor 3. When it is desired to carry out maintenance and/or replacement of the lower burner 27 and/or the radiator flap 30, then the radiator flap can be moved into its folded position and the assembly 26 removed from the oven 1 through the burner port 5.

As an alternative to the radiator flaps 16, 24 and 30 comprising a stainless steel backing support plate 17, a thermally insulating layer 18, and a wire mesh layer 19 as shown in Fig. 3, the stainless steel backing support plate may be so formed, for example with ridges, on its surface adjacent to the wire mesh layer that air is trapped between the backing support plate and the wire mesh layer. The trapped air can provide sufficient thermal insulation for the radiator flap, and a separate thermally insulating layer 18 need not be provided.

## Claims

1. A gas burner and radiator assembly for a tunnel oven, the assembly comprising a gas burner for a tunnel oven and a radiator flap, at least a portion of the radiator flap being of metal or metal alloy, and being so arranged that, in operation in the oven, the said portion of the radiator flap extends adjacent to the burner and, when the burner is alight and in normal operation in the oven, the visible part of a flame from the burner impinges on the said portion of the radiator flap.

2. A gas burner and radiator assembly as claimed in claim1, wherein the radiator flap is so arranged that, in operation in the oven, it has an exposed face in the path of combustion gases from the burner.

3. A gas burner and radiator assembly as claimed in claim 2, wherein the said metal or metal alloy portion of the radiator flap provides at least a portion of its exposed face, which face is so arranged, in operation in the oven, that heat radiated therefrom is directed towards material being conveyed through the oven.

4. A gas burner and radiator assembly as claimed in any one of claims 1 to 3, wherein the radiator flap is arranged adjacent to, but separated from, the burner, in operation in the oven.

5. A gas burner and radiator assembly as claimed in any one of claims 1 to 4, wherein the radiator flap is thermally insulated on its side facing away from the flame of the burner.

6. A gas burner and radiator assembly as claimed in any one of claims 1 to 5, wherein the radiator flap is so arranged that it can be inserted with the burner into the tunnel oven and removed with the burner therefrom.

7. A gas burner and radiator assembly as claimed in any one of claims 1 to 6, wherein the radiator flap is mounted on the burner.

8. A gas burner and radiator assembly as claimed in claim 6 or claim 7, wherein the radiator flap is movable relative to the burner between a folded position in which it can be removed from, or installed in, the oven with the burner and an operational position.

9. A gas burner and radiator assembly as claimed in claim 8, wherein the radiator flap comprises two or more sections that are movable relative to each other between a folded position and an operational position.

10. A gas burner and radiator assembly as claimed in any one of claims 1 to 9, wherein at least that portion of the radiator flap on which, in operation in the oven, the burner flame impinges can withstand being heated by the burner to a temperature of at least 800°C.

11. A gas burner and radiator assembly as claimed in claim 10, wherein at least the said portion of the radiator flap is made of fecralloy (trade mark).

12. A gas burner and radiator assembly as claimed in claim 3 or claim 4, wherein the said exposed face of the radiator flap is made of fecralloy (trade mark).

13. A gas burner and radiator assembly as claimed in claim 11 or claim 12, wherein the fecralloy is in the form of a mesh or mesh-like material.

14. A gas burner and radiator assembly as claimed in any one of claims 1 to 13, wherein the burner has an output of up to 40 kilowatts per metre length.

15. A tunnel oven comprising a gas burner and radiator assembly as claimed in any one of claims 1 to 14.

16. A tunnel oven having a conveyor for transporting material to be heated through the oven, at least one gas burner for heating the material as it is conveyed through the oven, a burner port through which the gas burner is removable from the oven for maintenance and/or replacement, and a radiator flap associated with the said burner, the radiator flap being removable from the oven with the burner through the burner port, at least a portion of the radiator flap being of metal or metal alloy, and , in operation, extending adjacent to the burner so that, when the burner is alight and in normal operation, the visible part of the flame from the burner impinges on the said portion of the radiator flap.

17. A tunnel oven as claimed in claim 16, wherein the gas burner and radiator flap are as claimed in any one of claims 6 to 9.

18. A tunnel oven as claimed in any one of claims 15 to 17, wherein the gas burner is an upper burner of the tunnel oven.

19. A tunnel oven as claimed in any one of claims 15 to 17, wherein the gas burner is a lower burner of the tunnel oven.

20. A tunnel oven having a plurality of burners, each being provided with a radiator flap to form an assembly as claimed in any one of claims 1 to 14, the tunnel oven being provided with a burner port for each of the said assemblies.

21. A radiator flap adapted for use as the radiator flap of the assembly as claimed in any one of claims 1 to 14.

22. A method of heating material in a tunnel oven comprising a gas burner and a radiator flap, at least a portion of the radiator flap being of metal or metal alloy, the method comprising conveying the material through the oven so as to be heated by a flame from the gas burner, the visible part of which impinges on the said portion of the radiator flap, the material also being heated by radiation from the radiator flap.

23. A method of heating material as claimed in claim 22 in which the gas burner and the radiator flap are as claimed in any one of claims 1 to 14.

24. A method of heating material as claimed in claim 22, wherein the tunnel oven is as claimed in any one of claims 15 to 20.
